(19) **Europäisches Patentamt**

**European Patent Office**

**Office européen des brevets**

(11) Publication number: **0 055 205**
**B1**

(12) **EUROPEAN PATENT SPECIFICATION** .

(45) Date of publication of patent specification: **13.08.86**

(51) Int. Cl.⁴: **F 16 D 69/02**

(21) Application number: **81630076.8**

(22) Date of filing: **17.11.81**

(54) **Sintered powder metal friction material.**

(30) Priority: **19.12.80 US 218316**

(43) Date of publication of application:
**30.06.82 Bulletin 82/26**

(45) Publication of the grant of the patent:
**13.08.86 Bulletin 86/33**

(84) Designated Contracting States:
**AT BE CH DE FR GB IT LI NL SE**

(56) References cited:
**FR-A-1 485 656**
**FR-A-1 485 676**
**FR-A-2 168 678**
**FR-E-71 778**

(73) Proprietor: **ABEX CORPORATION**
**Six Landmark Square P.O. Box 10268**
**Stamford, Connecticut 06904-2268 (US)**

(72) Inventor: **Lloyd, Herbert W.**
**82 Smith Hill Road**
**Monsey, NY 10952 (US)**

(74) Representative: **Schmitz, Jean-Marie et al**
**Office Dennemeyer S.à.r.l. 21-25 Allée Scheffer**
**P.O. Box 41**
**L-2010 Luxembourg (LU)**

Courier Press, Leamington Spa, England.

# 0 055 205

## Description

The present invention relates to an iron-base, sintered powder metal friction material for railroad braking use, formed by solid phase sintering and containing carbon, eventually sulfur, and/or alumina, ferrochrome and/or chrome carbide and the balance iron. For many years, cast iron has been used as a brake shoe. material for tread braking railroad vehicles. In an effort to improve wear life of railroad brake shoes, composition shoes were developed.

With the use of a composition shoe, the coefficient of friction can be tailored to the specific application requirements. However, some composition shoes are subject to wet fade, a condition which causes elongated stopping distances in wet weather. Also, composition shoes have been found to have a very short life when used in high energy braking applications, such as on locomotives, especially switching locomotives.

Another problem associated with composition shoes is that the products of decomposition, or debris, especially graphite, tend to "pollute" the wheel and rails, thus producing their coefficient of friction.

Another problem with high friction compoosition shoes has been their tendency to exhibit metal pickup, a phenomenom wherein slivers of wheel steel are transferred to the composition shoes. The metal on the shoes then causes gouging of the wheels during subsqent braking. Such gouging will cause wheels to quickly go out of tolerance and produce high flanges. These problems require premature wheel replacement and consequently increase costs.

Because of the problem with state-of-the-art railroad brake shoes, it was felt that a new type of railroad brake shoe would be developed. It was thought that a sintered powder metal material might be suitable, since it would probably exhibit very little wet fade.

Sintered powder metal shoes have been developed for use in the aircraft disc braking. Although aircraft braking is also high-energy braking, it is otherwise quite different from railroad braking. Aircraft braking is normally disc braking, while railroad braking is usually accomplished by engaging brake shoes with the running surface or tread of the cast steel wheels themselves. Because of this, aircraft friction materials have always been quite different from railroad friction materials. Sintered powder metal friction materials have also been recently introduced into the automotive market as disc pads. Automotive disc brakes are quite different from railroad tread brakes because of the energy levels involved and a single type of friction material is not suitable for both applications.

The FR—A— 1 485 656 discloses an iron-base sintered powder metal friction material according to the preamble of claims.

Sintered materials comprising powders of iron, carbon and sulfur were formulated and dynanometer tested in accordance with UIC and AAR test procedures. While wear life, coefficient of friction, stop distances and wet fade chartacteristics were quite good, some of the tests produced metal pickup in the shoes. Accordingly, adjustments were made to the formula by adding and deleting certain ingredients in an effort to eliminate metal pickup.

As a result of extensive testing, it was found that a friction material suitable for railroad braking can be made from a sintered mixture of powders of iron, carbon and a powdered metal additive selected from the group consisting of manganese, ferrochrome and chrome carbide compounds. Sulfur can be added and alumina is added when manganese powders are used. Brake shoes made from these materials exhibit good wear characteristics and little or no metal pickup, as will now be explained.

The iron-base, sintered powder metal friction material of the present invention is characterized in containing, by volume, 10—70% carbon; 0—2.5% sulfur, 0—10% alumina, 1—40% metal powder additive selected from the group consisting of ferrochrome, chrome carbide compounds and manganese.

To evaluate these friction materials, two dynamometer test procedures were used, UIC (European) and AAR (USA). The various mixes were formed into actual brake shoes and dynamometer tested against actual cast steel wheels.

The UIC test procedure is as follows:

1. Wear-in: 60 kph stop with 170.3.5 kg(3752 lb) BSL (Brake Shoe Load)
2. Test Stops: From speeds of 160, 120, 100, 90, 60, 50, 40, 30, 15 kph each with 3407, 2555, 1703.5, 851 kg, (7505, 5628, 3752, 1876 lb).BSL.
3. Drag tests: 37 KW load @ 60 kph — 20 minutes; 55 KW load @ 60 kph — 1 minute

The AAr test procedure is as follows:

1. Wear-in: Drag Test 658 kg (1450 lb.) BSL @ 20 mph — 45 minutes
2. Test Stops: 3 stops each from 90, 70, 50, 30, 10 mph with 908 kg (2000 lb) BSL.
   3 stops each from 90, 70, 50, 30, 10 mph with 2724 kg (6000 lb). BSL.
3. Drag Tests: 420 kg (925 lb) BSL @ 20 mph — 45 minutes
   658 kg (1450 lb) BSL @ 20 mph — 45 minutes

The criteria used to evaluate friction material performance were coefficient of friction, stop distance and wear.

Each mix was performed cold at 9 TSI, then sintered by heating to 871° — 1093°C (1600 — 2000°F) and pressing at 9 TSI. Each mix was put through some or all of the UIC or AAR tests noted above. The process of sintering, as used herein, means shaping and partially fusing by heating below the melting point.

**0 055 205**

Base Mix

The first mix tested had the following composition (volume %):

|  | MIX A |
| --- | --- |
| Iron | 50.8 |
| Carbon (graphite) | 46.7 |
| Sulfur | 2.5 |

Coefficient of friction, stop distance and wear rate were quite good. However, in five tests, metal pickup (shoes picking up metal from the wheel) was visually observed in two. The mix was rejected because metal pickup is undesirable, since it causes gouging of the wheel, which will quickly go out of tolerance. It was then decided to try different additive powders in an attempt to eliminate metal pickup.

Sulfur Mixes

It was initially thought that increasing the sulfur content might eliminate metal pickup. Two mixes with a high sulfur content were tested; their compositions were (volumes %):

|  | MIX B | MIX C |
| --- | --- | --- |
| Iron | 66.0 | 66.0 |
| Carbon (graphite) | 26.5 | 29.0 |
| Sulfur | 7.5 | 5.0 |

In 38 tests, metal pickup was observed in 18; these mixes were rejected.

Phosphorous Mixes

Two mixes having a purposeful phosphorous (via the use of ferrophosphorous) and aluminum oxide addition were tested. Because of the previous tests, sulfur was deleted. Their compositions were (volume %):

|  | MIX D | MIX E |
| --- | --- | --- |
| Iron | 58.4 | 58.0 |
| Carbon (graphite) | 25.8 | 25.5 |
| Ferrophosphorous | .9 | 1.8 |
| Aluminum Oxide | 14.9 | 14.7 |

in 29 tests, metal pickup was noted in 26; these mixes were rejected.

Manganese Mixes

Several mixes containing manganese as an additive powder was also tested. These mixes had a manganese content of 1.0 — 37.5% (volume). The compositions of examples of these mixes were (volume %).

|  | MIX I | MIX J | MIX K | MIX L |
| --- | --- | --- | --- | --- |
| Iron | 52.5 | 45.5 | 37.5 | 50.0 |
| Carbon (graphite) | 30.0 | 30.0 | 20.0 | 35.0 |
| Sulfur | 2.5 | 2.5 | 2.5 | ——— |
| Manganese | 10.0 | 20.0 | 37.5 | 10.0 |
| Aluminum Oxide | 5.0 | 5.0 | 2.5 | 5.0 |

Metal pickup was evident in seven out of 19 cases with less than 9.0% manganese, but in only one out of 113 tests where the manganese content was 9.0 — 37.5%. The absence of sulfur in Mix L had no apparent effect.

Ferrochrome Mixes

Several powder metal mixes containing chromium were tested. The chromium was introduced in the form of ferrochrome which consists of about half chrome carbide and about half iron chrome carbide. The ferrochrome additive ranged from 1.0 — 39.0% (volume). The compositions of some exemplary ferrochrome content mixes were (volume %).

|  | MIX M | MIX N | MIX O |
| --- | --- | --- | --- |
| Iron | 59.1 | 50.5 | 38.75 |
| Carbon (graphite) | 30.0 | 30.0 | 20.0 |
| Sulfur | 2.5 | 2.5 | 2.5 |
| Ferrochrome | 8.4 | 17.0 | 38.75 |

3

|  | MIX P | MIX Q | MIX R |
|---|---|---|---|
| Iron | 45 | 25 | 44 |
| Carbon (graphite) | 40 | 70 | 55 |
| Sulfur | — | — | — |
| Ferrochrome | 15 | 5 | 1 |

Many compositions using various proportions of iron, carbon amd ferrochrome were made and tested. It was determined that sulfur was not an essential ingredient in preventing metal pickup. In all, 233 tests were conducted with these materials. Metal pickup was evident in only 2 tests. It was then decided to formulate and test a mix using carbon in the form of coke to replace the graphite. The composition was (volume %).

|  | MIX S |
|---|---|
| Iron | 45 |
| Carbon (coke) | 40 |
| Ferrochrome | 15 |

Upon testing, this mix exhibited no metal pickup and performed much as Mix P which included graphite. It was concluded that the cheaper coke could be substituted for graphite.

The extensive testing conducted on iron-based, sintered powder metal friction materials containing iron and graphite indicated that the purposeful adition of manganese or ferrochrome dramatically reduced or eliminated metal pickup of wheel steel by the friction material during braking. To obtain desired friction levels, it was found desirable to add a friction agent such as aluminum oxide to the mixes containing manganese. Such addition was found unnecessary when ferrochome was used, probably because of the content of chrome carbides and iron chrome carbides in the ferrochrome. While sulfur was an initial ingredient, it was later found that the absence of sulfur had no visible effect on metal pickup.

It was determined that the metal pickup can be prevented, or reduced, best by using (volume %) 9+ % manganese, or 1 + % ferrochrome. Preferred ranges were determined to be 9 — 15% manganese with 2 — 8% aluminum oxide, or 5 — 20% ferrochrome. It was found that carbon, in the form of graphite or coke, could effectively be used in quantities of 10 — 70%, the preferred ranges being 30 — 40% when used with manganese, 29 — 70% when used with ferrochrome.

## Claims

1. An iron-base, sintered powder metal friction material for railroad bracking use, formed by solid phase sintering and containing carbon; eventually sulfur and/or alumina; ferrochrome and/or chrome carbide, and the balance iron, characterized in containing, by volume, 10 —70% carbon; 0 —2.5% sulfur; 1—10% alumina; 1—40% metal powder additive selected from the group consisting of ferrochrome, chrome carbide compounds and manganese.

2. The iron base, sintered powder metal friction material according to claim 1 characterized in that it includes 5 — 40% of said metal powder additive.

3. The iron base, sintered powder metal friction material according to claim 2, characterized in that said metal powder is only ferrochrome.

4. The iron base, sintered powder metal friction material according to claim 2, characterized in that the powder metal additive is only chrome carbide.

5. The iron base, sintered powder metal friction material according to claim 1 characterized in that it has 9 — 37.5% manganese as the only powder metal additive.

6. The iron base, sintered powder metal friction material according to claim 1 or 5, characterized in that it has 3 — 10% alumina and as the powder metal additive is 9 — 25% manganese.

7. The iron base, sintered powder metal friction material according to claim 1 characterized in containing, by volume, 30 — 40% carbon in the form of graphite, 2 — 8% alumina, and 9 — 15% manganese.

8. The iron base, sintered powder metal friction material according to claim 1, characterized in containing, by volume, 20 — 70% carbon and 5 — 25% ferrochrome.

9. The iron base, sintered powder metal friction material according to claim 8, characterized in that it has 25 — 45% carbon in the form of graphite and contains no sulfur.

## Patantansprüche

1. Sintermetallreibungsmaterial auf Basis von Eisen für Eisenbahnbremszecke, hergestellt durch Festphasensintern und enthaltend Kohlenstoff; eventuell Schwefel und/oder Aluminiumoxid; Ferrochrom und/oder Chromcarbid und als Rest Eisen, dadurch gekennzeichnet, daß es, volumenmäßig, 10—70 % Kohlenstoff; 0—2,5 % Schwefel, 0—10 % Aluminiumoxid; 1—40 % Metallpulverzusatz, ausgewählt aus der Gruppe, die aus Ferrochrom, Chromcarbidverbindungen und Mangan besteht, enthält.

2. Sintermetallreibungsmaterial auf Basis von Eisen nach Anspruch 1, dadurch gekennzeichnet, daß es 5—40 % des Metallpulverzusatzes enthält.

3. Sintermetallreibungsmaterial auf Basis von Eisen nach Anspruch 2, dadurch gekennzeichnet, daß der Metallpulverzusatz nur Ferrocrom ist.

4. Sintermetallreibungsmaterial auf Basis von Eisen nach Anspruch 2, dadurch gekennzeichnet, daß der Matallpulverzusatz nur Chromcarbid ist.

5. Sintermetallreibungsmaterial auf Basis von Eisen nach Anspruch 1, dadurch gekennzeichnet, daß es 9—37,5 % Mangan als einzigen Metallpulverzusatz hat.

6. Sintermetallreibungsmaterial auf Basis von Eisen nach Anspruch 1 oder 5, dadurch gekennzeichnet, daß es 3—10 % Aluminiumoxid, hat und daß der Metallpulverzusatz 9—25 % Mangan ist.

7. Sintermetallreibungsmaterial auf Basis von Eisen nach Anspruch 1, dadurch gekennzeichnet, daß es, volumenmäßig, 30—40 % Kohlenstoff in Form von Graphit, 2—8 % aluminiumoxid und 9—15 % Mangan enthält.

8. Sintermetallreibungsmaterial auf Basis von Eisen nach Anspruch 1, dadurch gekennzeichnet, daß es, volumenmäßig, 20—70 % Kohlenstoff und 5—25 % Ferrochrom enthält.

9. Sintermetallreibungsmaterial auf Basis von Eisen nach Anspruch 8, dadurch gekennzeichnet, daß es 25—45 % Kohlenstoff in Form von Graphit hat und keinen Schwefel enthält.

**Revendications**

1. Matériau de friction en poudre métallique frittée à base de fer destiné à être utilisé pour le freinage des véhicules de chemin de fer, ce matériau étant formé par frittage en phase solide, tandis qu'il contient du carbone, éventuellement du soufre et/ou de l'alumine, du ferrochrome et/ou du carbure de chrome. le reste étant du fer, caractérisé en ce qu'il contient, en volume, 10—70% de carbone, 0—2,5% de soufre, 0—10% d'alumine et 1—40% d'un additif méttalique en poudre choisi parmi le groupe comprenant le ferrochrome, les composés de carbure de chrome et le manganèse.

2. Matériau de friction en poudre métallique fritée à base de fer selon la revendication 1, caractérisé en ce qu'il comprend 5—40% de l'additif métallique en poudre.

3. Matériau de friction en poudre métallique fritée à base de fer selon la revendication 2, caractérisé en ce que l'additif métallique en poudre est constitué uniquement de ferrochrome.

4. Matériau de friction en poudre métallique fritée à base de fer selon la revendication 2, caractérisé en ce que l'additif métallique en poudre est constitué uniquement de carbure de chrome.

5. Matériau de friction en poudre métallique fritée à base de fer selon la revendication 1, caractérisé en ce qu'il contient 9—37,5% de manganèse comme unique additif metallique en poudre.

6. Matériau de friction en poudre métallique fritée à base de fer selon la revendication 1 ou 5, caractérisé en ce qu'il contient 3—10% d'alumine, ainsi que 9—25% de manganèse comme unique additif métallique en poudre.

7. Matériau de friction en poudre métallique frittée à base de fer selon la revendication 1, caractérisé en ce qu'il contient, en volume, 30—40% de carbone sous forme de graphite, 2—8% d'alumine et 9—15% de manganèse.

8. Matériau de friction en poudre métallique fritée à base de fer selon la revendication 1, caractérisé en ce qu'il contient, en volume, 20—70% de carbone et 5—25% de ferrochrome.

9. Matériau de friction en poudre métallique fritée à base de fer selon la revendication 8, caractérisé en qu'il contient 25—45% de carbone sous forme de graphite, tandis qu'il ne contient pas de soufre.